(19) **Europäisches Patentamt**
**European Patent Office**
**Office européen des brevets**

(11) **EP 3 910 871 B1**

(12) **EUROPEAN PATENT SPECIFICATION**

(45) Date of publication and mention
of the grant of the patent:
**03.09.2025 Bulletin 2025/36**

(21) Application number: **20174889.4**

(22) Date of filing: **15.05.2020**

(51) International Patent Classification (IPC):
*H04L 9/06* (2006.01)   *H04L 9/32* (2006.01)

(52) Cooperative Patent Classification (CPC):
**H04L 9/0643; H04L 9/3239; H04L 9/3247;**
H04L 2209/122; H04L 2209/125

(54) **TWEAKABLE HASH FUNCTION IN HASH BASED SIGNATURE SCHEMES**

OPTIMIERBARE HASH-FUNKTION IN HASH-BASIERTEN SIGNATURSCHEMATA

FONCTION DE HACHAGE AJUSTABLE DANS DES SCHÉMAS DE SIGNATURE À BASE DE HACHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.11.2021 Bulletin 2021/46**

(73) Proprietor: **Cysec SA
1015 Lausanne (CH)**

(72) Inventors:
• **TRAVERSO, Giulia**
**1015 Lausanne (CH)**
• **FELK, Yacine**
**1015 Lausanne (CH)**
• **ROSCINO, Roberto**
**1015 Lausanne (CH)**
• **KARLOV, Alexandre**
**1015 Lausanne (CH)**
• **UPEGUI, Andres**
**1202 Geneve (CH)**
• **GANTEL, Laurent**
**1202 Geneve (CH)**
• **DUC, Alexandre**
**1401 Yverdon-les-Bains (CH)**

(74) Representative: **Plasseraud IP
104 Rue de Richelieu
CS92104
75080 Paris Cedex 02 (FR)**

(56) References cited:
**US-A1- 2019 319 797**

• JEAN-PHILIPPE AUMASSON ET AL: "SPHINCS +
Submission to the NIST post-quantum project
Contents", 14 March 2019 (2019-03-14),
XP055722387, Retrieved from the Internet
<URL:http://sphincs.org/data/sphincs
+-round2-specification.pdf> [retrieved on
20200813]

## Description

### Technical Field

The present invention relates a method for implementing a tweakable hash function to optimize hardware resource utilization used in hash-based signature schemes for signing a digital message. The invention also concerns a device for executing the method according to the invention.

### Background of the art

Society's economic growth across all sectors heavily relies nowadays on generating, transmitting, storing and processing digital data. The protection of digital data and their secure transmission has therefore become a major concern for both businesses and governments.

Cryptography is in charge for securing digital data. Digital signatures schemes protect the authenticity and integrity of data as well as guarantee non-repudiation of the signatures themselves. Digital signature schemes are therefore indispensable for security on the Internet and are used to protect with this respect, for example, e-mails, software updates, financial transactions, military secrets. Digital signature schemes are a key player in the Transport Layer Security (TLS) protocol, which is used for secure data transfer and to create certificates in public-key infrastructure (PKI).

The security of digital signature schemes and, more in general, of cryptographic primitives relies on the hardness of mathematical problems, i.e. on the fact that there are certain mathematical problems that are intractable even for the most powerful computer currently available. Intractability (or hardness). In other words, it means that, although in principle solvable, it is impossible to find a solution to these problems in polynomial time.

Most signature schemes that are currently in use are considered secure as long as either the so called integer factorization problem or the discrete logarithm problem are computationally hard. The first construction of a digital signature scheme, called the RSA signature, was presented in 1978 by Rivest, Shamir, and Adleman. At present, no algorithms have yet been found to solve these problems on conventional computers in polynomial time.

However, in 1994, Shor presented an algorithm to solve the above mentioned mathematical problems in polynomial time using quantum computation, i.e. using qubits

(quantum physical states) instead of regular bits. The existence of Shor's algorithm implies that all cryptographic schemes whose security is based on the hardness of the integer factorization problem or the discrete logarithm problem are considered broken as soon as large-scale quantum computers are invented.

In particular, Shors algorithm run on a sizeable quantum computer will break the RSA signature scheme and its more recent variants, which are the most widely used signature schemes.

The significant advances in the area of quantum computing of the past decade leaves no doubt about the fact that quantum computers are an actual threat to existing solutions of cryptography and digital signatures schemes.

Small-scale quantum computers already exist and at present, both research and industry are taking significant efforts to construct large-scale quantum computers for a good reason. It is reasonable to assume that within 20 years, quantum computers that are able to break the RSA scheme could exist

In order to maintain uninterrupted security on the Internet and the authenticity, integrity, and non-repudiation of data, it is important to prepare a secure transition from our current, classical PKI to cryptographic solutions that are secure even in the presence of a quantum attacker.

The term post-quantum cryptography refers to all those cryptographic primitives whose security is based on mathematical problems that are intractable even for large-scale quantum computers. Besides designing signature schemes that are provably secure against attacks run on quantum computers, it is crucial that, when brought into practice, the implementation of these post-quantum signature schemes are also resilient against physical attacks such as fault attacks and side-channel attacks.

Also, a key element for the adoption of such signature schemes by all current available applications is that their run-time and space are as efficient as their classical counterpart. That means that signatures should be both computed and verified fast and that their key and signature sizes is short. In particular, a relevant benchmark are the RSA signature schemes since not only they are efficient in terms of computational overload and storage space, but also because the vast majority of certificates used in PKI are generated using these signature schemes.

Therefore, there is a need to improve the standardization of post-quantum cryptography solutions, in particular the post-quantum signature schemes, by facilitating their hardware implementations.

### Summary of the invention

The above problems are solved, at least partially, by the method and the device according to present invention whose scope is defined by the appended claims.

The present invention concerns a method for implementing a tweakable hash function to optimize hardware resource utilization used in hash-based signature schemes for signing a digital message, the method comprising :

-    i) Providing input data derived from the digital message to be signed;

-    ii) Segmenting the input data in chunk blocks of "n" bits;

-    iii) Generating an input sequence based on the chunk blocks, said input sequence being suitable for being provided to a hash computing engine, said computing engine comprising input blocks to receive the input sequence;

-    iv) Computing a tweakable hash function (T) with a hash computing engine based on the input sequence to generate the tweaked hash value;

the method being characterized in that the tweakable hash function is defined to sort the chunk blocks of the input sequence so that each chunk block fits into a single input block.

In the present invention, the hardware resource utilization, in particular the register storage, is optimized by using a redefined or a new definition of a tweakable hash function executed by a hash computing engine to sign a digital message. The input of the tweakable hash function is an input sequence composed of chunk blocks of input data derived from a digital message to be signed.

Advantageously, the tweakable hash function is defined to sort or align the chunk blocks to ensure each chunk block fits into a single input block, resulting in a simplified input sequence. In other words, the point is to align or fit each chunk block on the boundaries of the input block to prevent to split or separate chunk blocks on multiple input blocks (for instance two) which requires to add storage register(s) for subsequent input blocks.

The definition of the tweakable hash function according to the present invention allows to spare a significant number of bits of storage registers in the hash computing engine. Overall, in the present invention, less storage registers are needed compared to the existing definitions of tweakable hash functions, which allows to lower the storage registers consumption.

The definition of the tweakable hash function according to the present invention simplifies the logics inherent of the tweakable hash function. This entails higher clock frequency and, thus, better performance in terms of efficiency of the computation of the tweakable hash function.

Reordering the input data, in particular the input chunks, permits to simplify wide datapath hardware implementations and thus allows to save precious hardware resources in terms of logic gates and storage registers.

The present invention proposes an efficient and compact hardware implementation to optimize hardware resource utilization used in hash-based signature schemes. This allows to reduce power consumption.

In an embodiment, the input sequence comprises a seed, all the chunk blocks and an address in a compressed format placed one after another from the beginning of the input sequence to the end of the input sequence, preferably said chunk blocks being placed between said seed and said address. In hashed based signature schemes requiring compressed data in the input sequence, the compressed address is generally always placed in the beginning of the input sequence.( for instance in SPHINCS+) This creates an offset and all the following chunk blocks are no longer aligned on the boundaries of the input blocks. The reason is that the compressed address is not an integer of the "n" bits input block width. In this embodiment, the compressed address is placed at the end of the input sequence to avoid this offset.

According to an embodiment, the method further comprises a step of adding a padding at the end of said input sequence. The padding step ensures to fill in entirely the last input block of said input sequence. Therefore, the last input chunk will be padded so that it will have the same length as the corresponding input block.

In an embodiment, each input block has a width corresponding to an integer of one chunk block having of "n" bits. Overall, the number of input chunk per input block depends on the security parameter "n" which is the width of the input chunk.

For instance, each input block is 512 bits and each chunk is 128 bits or 256 bits. When each chunk block is 128 bits length, each input block can comprise four chunk blocks maximum. When each chunk block is 256 bits length, each input block can comprise two chunk blocks maximum.

In an embodiment, the input sequence starts with a seed padded with required zero bits to fill the first input block.

According to an embodiment, the first input block is computed once, cashed and reused for computing a plurality of tweakable hash functions of different input data. This allows to reduce the total number of call to the tweakable hash function thereby saving time.

In an embodiment, the hash-based signature scheme is chosen among the hashed based signature schemes requiring compressed data in the input sequence, for instance a compressed address, preferably the hashed based signature scheme is SPHINCS+.

According to an embodiment, the tweakable hash function is chosen among hash functions defined with a padding at the last input block, for instance SHA 256. Padding permits to cope against length-extension attacks

In an embodiment, the tweakable hash function is defined as $\mathbf{T}^t$ (**PK**.seed, **ADRS**, $M$) = SHA-256(**PK**.seed$//0^{512-n}//M//$**ADRS**$^c$).

In the $\mathrm{T}^t$ tweakable function defined above, the compressed address is placed at the end of the input sequence executed by the hash computing engine. This way, the input blocks for n = 256 is simplified because it is no longer necessary to split some chunk blocks across two subsequent input blocks and, instead, all chunk blocks are aligned on the SHA-256 512-bits input blocks. This modification allows to spare 179-bits of registers storage in the hash computing engine.

According to an embodiment, the method is executed on a device chosen among circuit devices, reconfigurable circuit devices for example a Field Programmable Gate Array (FPGA), integrated circuit devices such as Application Specific Integrated circuit (ASIC).

In an embodiment, the digital message to be signed is chosen among healthcare data such as genomic data, space related image such as satellite images. Overall, the advantages of present invention are more significant when lengthy digital data have to be signed where the lowered storage consumption provided by the definition of the tweakable hash function according to the present invention is more visible. There are several practical use-cases where large quantities of data have to be signed and that would immensely benefit from having their authenticity and integrity protection guaranteed in the long- term, i.e. against quantum computers. In particular, two of the most prominent applications in need for such solutions are the healthcare (with medical records) and the space industry (with satellite images) even if the invention is not limited to these applications.

According to an embodiment, the method is used for signing digital messages in a blockchain. Material to be signed via blockchain keeps growingBeing able to lower the number of hash calls becomes more and more critical for efficient computation of the signatures in this context.

The invention also concerns a device comprising a circuit arranged for executing a method according to the invention.

The particular advantages of the device are similar to the ones of the method according to the invention and will thus not be repeated here.

The embodiments describe for the device also apply to the methods according to the present invention mutatis mutandis.

The present invention can comprise a single embodiment or a combination of embodiments.

## Brief description of the drawings

Further particular advantages and features of the invention will become more apparent from the following non-limitative description of at least one embodiment of the invention which will refer to the accompanying drawings, wherein

- Figure 1 represents a tweakable hash padding case for n=256 for a first tweakable function T1 according to the prior art;
- Figure 2 represents a tweakable hash padding case for n=256 for a second tweakable function T2 according to an embodiment of the present invention;

## Detailed description of the invention

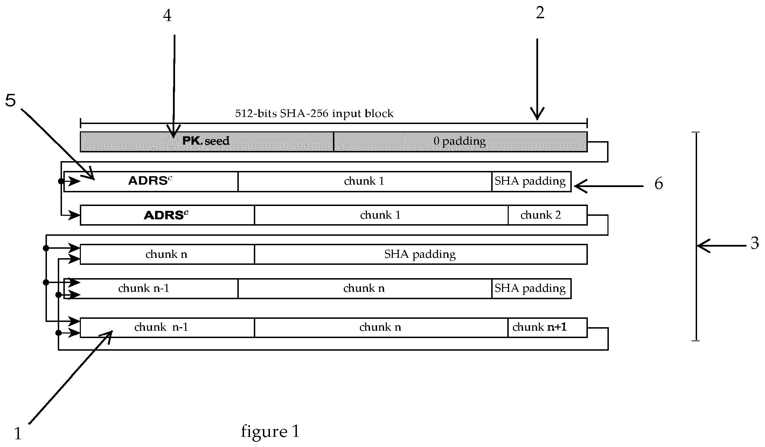

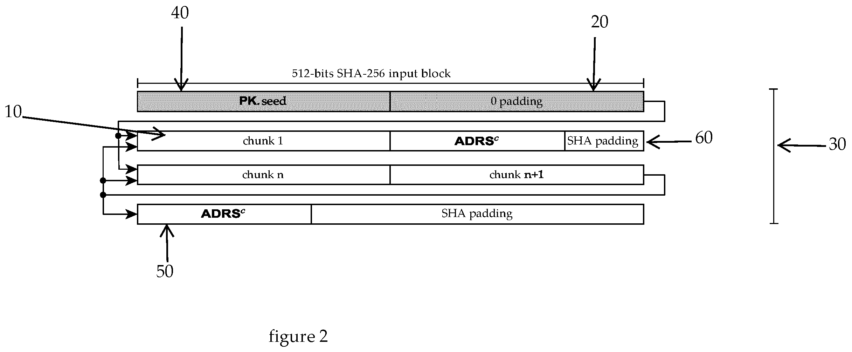

In the present example represented in figures 1 and 2, the hash based signature scheme is SPHINCS+ and the tweakable hash function T (named T1 and T2 below) is SHA-256. In this example, the tweakable function is executed in a Field Programmable Gate Array (FPGA). However, the invention is not limited to SPHINCS+, SHA-256 or FPGA.

The input data, for instance genomic data, are segmented in chunk blocks 1 of 256 bits width.

The chunk blocks 1 are received in input blocks 2 of 512 bits width each.

Figures 1 and 2 compared the 512-bits SHA 256 input blocks 2,20 executed by respectively a first tweakable function T1 known from the prior art and a second tweakable function T2 according to the present invention.

The first tweakable function T1 is defined as

$$\mathbf{T1}\,(\mathbf{PK}.\mathrm{seed}, \mathbf{ADRS}, M) = \mathrm{SHA\text{-}256}(\mathbf{PK}.\mathrm{seed}//0^{512-n}//\mathbf{ADRS}^c//M)$$

As represented in figure 1, the input sequence 3 comprises a **PK**.seed 4, a compressed address **ADRS**$^c$ 5 and a SHA padding 6.

In the first block, the **PK**.seed 4 is padded with 512 $n$ zero bits to fill the SHA-256 512-bits input block 2, allowing the result of the first SHA-256 operation to be cached for future thash calls. The first block 2 is only computed once and cached in the SHA-256 core.

The compressed address ADRS$^c$ 5 drops some constant bits of the address, allowing to fit the compressed address 5, a full chunk block 1 and the required SHA padding 6 in a SHA-256 input block 2 in the case of a single input chunk 1 call. However, because of this address compression, the chunk block 1 following the first chunk block 1 are all offset and no longer aligned on the 512-bits boundary of a SHA- 256 input block 2, requiring to add registers to keep the remaining part of the chunk block 1 until the next chunk block 2 as represented in figure 1.

In other words, this a first tweakable hash function T1 is optimized for a one input chunk use case of tweakable hash function. The definition of the tweakable function T1 aims at speeding up the one message use case, but it is not appropriate when lengthy digital data have to be signed. Function T1 leads to a sub-optimal usage of the storage resources when it comes to the hardware implementation of the signature scheme since T1 entails a usage of multiple registers to split chunk blocks 1 among the input blocks 2.

Figure 2 represents the implementation of the second tweakable hash function T2 in SPHINCS+, T2 being an example of a definition of a tweakable hash function according to the present invention, T2 being defined as

$$\mathbf{T2}^t(\mathbf{PK}.\mathrm{seed}, \mathbf{ADRS}, M) = \mathrm{SHA}\text{-}256(\mathbf{PK}.\mathrm{seed}//0^{512-n}//M//\mathbf{ADRS}^c).$$

As represented in figure 2, the input sequence 30 comprises a **PK.**seed 40, a compressed address **ADRS**$^c$ 50 and a SHA padding 60.

The difference between T1 and T2 is that the compressed address ADRSc 50 is moved at the end of the input sequence 30. This way, it is no longer necessary to split some input chunks 10 across two subsequent input blocks 20 as illustrated in Figure 1. Instead, all input chunks 10 are aligned on the SHA-256 512-bits input blocks 20. This new definition of the tweakable function allows to spare 179-bits of registers storage in the tweakable hash engine. It also simplifies the mixing of SHA-256 input blocks 20.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Reference numbers

**[0054]**

1,10   Chunk block
2,20   Input block
3,30   Input sequence
4,40   PK seed
5,50   Compressed address

## Claims

1. A method for implementing a tweakable hash function to optimize hardware resource utilization used in hash-based signature schemes for signing a digital message, the method comprising :

   - i) Providing input data derived from the digital message to be signed;
   - ii) Segmenting the input data in chunk blocks (1,10) of "n" bits;
   - iii) Generating an input sequence (3,30) based on the chunk blocks (1,10), said input sequence being suitable for being provided to a hash computing engine, said computing engine comprising input blocks (2,20) to receive the input sequence;
   - iv) Computing a tweakable hash function (T2) with a hash computing engine based on the input sequence (3,30) to generate the tweaked hash value;
   the method being **characterized in that** the input sequence comprises a seed (4,40), wherein the seed (4, 40) is padded with required zero bits to fill the first input block, all the chunk blocks (2,20) and an address (5,50) in a compressed format placed one after another from the beginning of the input sequence (3,30) to the end of the input sequence (3,30)
   and **in that** the tweakable hash function is defined to sort the chunk blocks (1,10) of the input sequence (3,30) so that each chunk block (1,10) fits into a single input block (2,20).

**2.** Method according to claim 1 further comprising a step of adding a padding (6,60) at the end of said input sequence (3,30).

**3.** Method according to any one of claims 1 to 2, wherein each input block (2,20) has a length corresponding to an integer multiple of one chunk block (1,10) having "n" bits.

**4.** Method according to the preceding claim, wherein each input block (2,20) is 512 bits and each chunk block (1,10) is 128 bits or 256 bits.

**5.** Method according to any one of claims 1 to 4, wherein the first input block (2,20) is computed once, cached and reused for computing a plurality of tweakable hash functions of different input data.

**6.** Method according to any one of claims 1 to 5, wherein the hash-based signature scheme is chosen among the hashed based signature schemes requiring compressed data in the input sequence (3,30), for instance a compressed address, preferably the hashed based signature scheme is SPHINCS+.

**7.** Method according to any one of claims 1 to 6, wherein the hash function is chosen among hash functions defined with a padding (6,60) at the last input block (2,20), for instance SHA 256.

**8.** Method according to any one of claims 1 to 7, wherein the tweakable hash function T2 is defined as $\mathbf{T}^t$ ($\mathbf{PK}$.seed, $\mathbf{ADRS}$, $M$) = SHA-256($\mathbf{PK}$.seed$\|0^{512-n}\|M\|\mathbf{ADRS}^c$)
wherein PK is a Public seed, ADRS is an address, ADRS$^c$ is the compressed address, M is the chunk blocks, SHA-256 is a hash function.

**9.** Method according to any one of claims 1 to 8, wherein the method is executed on a device chosen among circuit devices, reconfigurable circuit devices for example a Field Programmable Gate Array (FPGA), integrated circuit devices such as Application Specific Integrated circuit (ASIC).

**10.** Method according to any one of claims 1 to 9, wherein the digital message to be signed is chosen among healthcare data such as genomic data, space related image such as satellite images.

**11.** Method according to any one of claims 1 to 9, wherein the method is used for signing digital messages in a blockchain.

**12.** Device comprising a circuit arranged for executing a method according to any one of claims 1 to 11.

**Patentansprüche**

**1.** Verfahren zum Implementieren einer verbesserbaren Hashfunktion zum Optimieren von Hardwareressourcen-Nutzung, die in Hash-basierten Signaturschemata benutzt wird, um eine digitale Meldung zu signieren, wobei das Verfahren aufweist:

- i) Bereitstellen von Eingabedaten, die von der zu signierenden digitalen Meldung hergeleitet werden;
- ii) Segmentieren der Eingabedaten in Portionsblöcke (1, 10) von "n"-bits;
- iii) Erzeugen einer Eingabesequenz (3, 30) basierend auf den Portionsblöcken (1, 10), wobei die Eingabesequenz geeignet ist, um zu einer Hash-Rechenmaschine geliefert zu werden, wobei die Rechenmaschine Eingabeblöcke (2, 20) zum Empfangen der Eingabesequenz aufweist;
- iv) Berechnen einer verbesserbaren Hashfunktion (T2) mit einer Hash-Rechenmaschine basierend auf der Eingabesequenz (3, 30), um den verbesserten Hashwert zu erzeugen;

wobei das Verfahren **dadurch gekennzeichnet ist, dass** die Eingabesequenz einen Keim (4, 40), wobei der Keim (4, 40) mit erforderlichen Nullbits abgepolstert ist, um den ersten Eingabeblock zu füllen, alle die Portionsblöcke (2, 20) und eine Adresse (5, 50) in einem komprimierten Format aufweist, die vom Beginn der Eingabesequenz (3, 30) bis zum Ende der Eingabesequenz (3, 30) nacheinander platziert sind, und dass die verbesserbare Hashfunktion definiert ist, um die Portionsblöcke (1, 10) der Eingabesequenz (3, 30) so zu sortieren, dass jeder Portionsblock (1, 10) in einen einzelnen Eingabeblock (2, 20) passt.

**2.** Verfahren nach Anspruch 1, das ferner einen Schritt aufweist, ein Polster (6, 60) an das Ende der Eingabesequenz (3, 30) anzufügen.

**3.** Das Verfahren nach einem der Ansprüche 1 bis 2, wobei jeder Eingabeblock (2, 20) eine Länge hat, die einem ganzzahligen mehrfachen eines Portionsblocks (1, 10) mit "n"-bits entspricht.

**4.** Das Verfahren nach dem vorangehenden Anspruch, wobei jeder Eingabeblock (2, 20) 512 bits ist und jeder Portionsblock (1, 10) 128 bits oder 256 bits ist.

**5.** Das Verfahren nach einem der Ansprüche 1 bis 4, wobei der erste Eingabeblock (2, 20), für die Berechnung einer Mehrzahl von verbesserbaren Hashfunktionen unterschiedlicher Eingabedaten, einmal berechnet, zwischengespeichert und wiederverwendet wird.

**6.** Das Verfahren nach einem der Ansprüche 1 bis 5, wobei das Hashbasierte Signaturschema unter den Hash-basierten Signaturschemata gewählt wird, die komprimierte Daten in der Eingabesequenz (3, 30), zum Beispiel eine komprimierte Adresse, erfordern, wobei bevorzugt das Hashbasierte Signaturschema SPHINCS+ ist.

**7.** Das Verfahren nach einem der Ansprüche 1 bis 6, wobei die Hashfunktion unter Hashfunktionen gewählt wird, definiert mit einem Polster (6, 60) an dem letzten Eingabeblock (2, 20), zum Beispiel SHA 256.

**8.** Das Verfahren nach einem der Ansprüche 1 bis 7, wobei die verbesserbare Hashfunktion T2 definiert ist als

$$\mathbf{T}^t(\mathrm{PK.seed, ADRS}, M) = \mathrm{SHA\text{-}256}(\mathrm{PK.seed}\|0^{512-n}\|M\|\mathbf{ADRS}^c)$$

Wobei PK ein öffentlicher Keim ist, ADRS eine Adresse ist, $\mathrm{ADRS}^c$ die komprimierte Adresse ist, M die Portionsblöcke ist, SHA-256 eine Hashfunktion ist.

**9.** Das Verfahren nach einem der Ansprüche 1 bis 8, wobei das Verfahren auf einer Vorrichtung ausgeführt wird, die ausgewählt wird unter Schaltungsvorrichtungen, rekonfigurierbaren Schaltungsvorrichtungen wie zum Beispiel einem feldprogrammierbaren Gate Array (FPGA), integrierten Schaltungsvorrichtungen wie etwa anwenderspezifische integrierte Schaltung (ASIC).

**10.** Das Verfahren nach einem der Ansprüche 1 bis 9, wobei die zu signierende digitale Meldung ausgewählt wird unter Gesundheitsdaten wie etwa Genomdaten, Weltraum-bezogenem Bild wie etwa Satellitenbildern.

**11.** Das Verfahren nach einem der Ansprüche 1 bis 9, wobei das Verfahren zum Signieren von digitalen Meldungen in einer Blockkette benutzt wird.

**12.** Vorrichtung, die eine Schaltung aufweist, die angeordnet ist, um das Verfahren nach einem der Ansprüche 1 bis 11 auszuführen.

**Revendications**

**1.** Procédé de mise en œuvre d'une fonction de hachage ajustable pour optimiser une utilisation de ressources matérielles utilisées dans des schémas de signature à base de hachage pour signer un message numérique, le procédé comprenant :

- i) la fourniture de données d'entrée dérivées à partir du message numérique à signer ;
- ii) la segmentation des données d'entrée en blocs de segment (1,10) de « n » bits ;
- iii) la génération d'une séquence d'entrée (3, 30) sur la base des blocs de segment (1, 10), ladite séquence d'entrée étant adaptée pour être fournie à un moteur de calcul de hachage, ledit moteur de calcul comprenant des blocs d'entrée (2, 20) pour recevoir la séquence d'entrée ;
- iv) le calcul d'une fonction de hachage ajustable (T2) avec un moteur de calcul de hachage sur la base de la séquence d'entrée (3,30) pour générer la valeur de hachage ajustée ;

le procédé étant **caractérisé en ce que** la séquence d'entrée comprend une valeur de départ (4,40), dans lequel la valeur de départ (4,40) est remplie de bits zéro requis pour remplir le premier bloc d'entrée, tous les blocs de segment (2,20) et une adresse (5,50) dans un format comprimé placés l'un après l'autre du début de la séquence d'entrée (3,30) à la fin de la séquence d'entrée (3,30)

et **en ce que** la fonction de hachage ajustable est définie pour trier les blocs de segment (1,10) de la séquence d'entrée (3,30) de sorte que chaque bloc de segment (1,10) s'insère dans un seul bloc d'entrée (2,20).

2. Procédé selon la revendication 1, comprenant en outre une étape d'ajout d'un remplissage (6,60) à la fin de ladite séquence d'entrée (3,30).

3. Procédé selon l'une quelconque des revendications 1 à 2, dans lequel chaque bloc d'entrée (2,20) a une longueur correspondant à un multiple entier d'un bloc de segment (1,10) ayant « n » bits.

4. Procédé selon la revendication précédente, dans lequel chaque bloc d'entrée (2,20) est de 512 bits et chaque bloc de segment (1,10) est de 128 bits ou 256 bits.

5. Procédé selon l'une quelconque des revendications 1 à 4, dans lequel le premier bloc d'entrée (2,20) est calculé une fois, mis en cache et réutilisé pour calculer une pluralité de fonctions de hachage ajustables de données d'entrée différentes.

6. Procédé selon l'une quelconque des revendications 1 à 5, dans lequel le schéma de signature à base de hachage est choisi parmi les schémas de signature à base de hachage nécessitant des données comprimées dans la séquence d'entrée (3, 30), par exemple une adresse comprimée, de préférence le schéma de signature à base de hachage est SPHINCS+.

7. Procédé selon l'une quelconque des revendications 1 à 6, dans lequel la fonction de hachage est choisie parmi des fonctions de hachage définies avec un remplissage (6,60) au niveau du dernier bloc d'entrée (2,20), par exemple SHA 256.

8. Procédé selon l'une quelconque des revendications 1 à 7, dans lequel la fonction de hachage ajustable T2 est définie comme $T^t$ (**PK**.seed, **ADRS**, $M$) = SHA-256(**PK**.seed$\|o^{512-n}\|M\|$**ADRS**$^c$)
   dans lequel PK est une valeur de départ publique, ADRS est une adresse, ADRS$^c$ est l'adresse comprimée, M est les blocs de segment, SHA-256 est une fonction de hachage.

9. Procédé selon l'une quelconque des revendications 1 à 8, dans lequel le procédé est exécuté sur un dispositif choisi parmi des dispositifs de circuit, des dispositifs de circuit reconfigurables par exemple un réseau prédiffusé programmable par l'utilisateur (FPGA), des dispositifs de circuit intégré tels qu'un circuit intégré spécifique à l'application (ASIC).

10. Procédé selon l'une quelconque des revendications 1 à 9, dans lequel le message numérique à signer est choisi parmi des données de santé telles que des données génomiques, une image liée à l'espace telle que des images satellitaires.

11. Procédé selon l'une quelconque des revendications 1 à 9, dans lequel le procédé est utilisé pour la signature de messages numériques dans une chaîne de blocs.

12. Dispositif comprenant un circuit agencé pour exécuter un procédé selon l'une quelconque des revendications 1 à 11.

figure 1

figure 2